**Europäisches Patentamt**

**European Patent Office**

**Office européen des brevets**

(19)

(11) Veröffentlichungsnummer: **0 065 105**
**B1**

(12) **EUROPÄISCHE PATENTSCHRIFT**

(45) Veröffentlichungstag der Patentschrift:
**19.06.85**

(51) Int. Cl.⁴: **B 23 D 17/06**

(21) Anmeldenummer: **82103086.3**

(22) Anmeldetag: **10.04.82**

(54) **Schere für stabförmiges Schneidgut.**

(30) Priorität: **19.05.81 DE 3119881**

(43) Veröffentlichungstag der Anmeldung:
**24.11.82 Patentblatt 82/47**

(45) Bekanntmachung des Hinweises auf die Patenterteilung:
**19.06.85 Patentblatt 85/25**

(84) Benannte Vertragsstaaten:
**AT BE CH DE FR GB IT LI LU NL SE**

(56) Entgegenhaltungen:
**GB - A - 928 817**

(73) Patentinhaber: **Mecapec S.A., Postfach,
CH-8716 Schmerikon (CH)**

(72) Erfinder: **Fuchs, Ernst, Oberseestrasse,
CH-8716 Schmerikon (CH)**
Erfinder: **Rimmele, Karl, St. Gailerstrasse,
CH-8716 Schmerikon (CH)**
Erfinder: **Bieri, Hans, Ing., Oberrickstrasse,
CH-8330 Pfäffikon (CH)**

(74) Vertreter: **Vièl, Georg, Dipl.-Ing., Am Zimmerplatz 16,
D-6606 Saarbrücken-Gersweiler (DE)**

BUNDESDRUCKEREI BERLIN

**Beschreibung**

Die Erfindung bezieht sich auf eine Schere für stabförmiges Schneidgut nach dem Oberbegriff des Patenanspruchs 1. Solche Scheren werden insbesondere zum Trennen oder Ablängen von Walzprofilsträngen im Anschluß an Walzstraßen eingesetzt.

Eine Schere der eingangs erwähnten Art ist bekannt aus der GB-PS 928 817. Dort sind zwei Messerträger relativ zueinander schwenkbar gelagert und stehen mit einer Zylinder-Kolbenanordnung als Antriebsvorrichtung für den Schneidvorgang in Wirkverbindung. Die Zylinder-Kolbenanordnung ist mit beiden Messerträgern schwenkbar verbunden, so daß sich die Zylinderachse entsprechend der Arbeits-Schwenkbewegung verlagern kann. Demgemäß werden auch die Druck-Arbeitsräume der Zylinder-Kolbenanordnung relativ zu beiden Messerträgern und zum Maschinengestell bewegt, was die Notwendigkeit von beweglichen Kupplungen im Zuge der Druckzuführungsleitungen zwischen der fluidischen Druckspeiseeinrichtung und den Arbeitsräumen zur Folge hat. Im Falle der Verwendung von Druckschläuchen ist dies mit einer Verminderung der Betriebssicherheit verbunden, die vor allem bei der üblichen Ölspeisung wegen Brand- und Verschmutzungsgefahr ins Gewicht fällt, im Falle der Anwendung von Gelenkkupplungen oder dergleichen mit erhöhtem Bauaufwand und Verschleißanfälligkeit. Außerdem ist die übliche Ausbildung solcher Scheren mit einer seitlich der Schneidgutführung weit ausladenden Bauweise verbunden, was bei Anordnung an mehrradigen Walzstraßen oder sonstigen Parallel-Bearbeitungsstationen zu Platzschwierigkeiten führt. Außerdem ist die bekannte tordierend arbeitende Schere nur für Profilmaterial und nicht für Massiv-Querschnitte geeignet.

Aufgabe der Erfindung ist daher die Schaffung einer Stabschere, die sich durch erhöhte Betriebssicherheit bei vergleichsweise geringem Bauaufwand auszeichnet und deren Konstruktion eine in Seitenrichtung zum Schneidgut platzsparende Ausführung begünstigt. Die Lösung dieser Aufgabe ist bestimmt durch die Merkmale des kennzeichnenden Teiles des Anspruchs 1.

Demgemäß ermöglicht die gemeinsame Bewegbarkeit der druckfluidführenden Teile des Antriebsorgans, im allgemeinen einer Zylinder-Kolbenanordnung, mit dem bezüglich der Schneidgutführung beweglichen Messerträger in Verbindung mit einer entsprechenden Ausbildung der zugehörigen Druckspeiseeinrichtung eine durchgehend feste Anordnung der Druckleitungen ohne bewegliche Kupplungen oder Schläuche. Ebenso wird durch den vereinfachten Aufbau eine platzsparende Konstruktion begünstigt.

Weitere Vorteile der Erfindung werden an dem in den Zeichnungen schematisch dargestellten Ausführungsbeispiel erläutert. Hierin zeigt

Fig. 1 eine perspektivische Darstellung einer erfindungsgemäßen Stabschere,

Fig. 2 ein Blockschema des Hydrauliksystems der Druckspeiseeinrichtung der Schere und

Fig. 3 ein Blockschema des Kühlsystems der Druckspeiseeinrichtung.

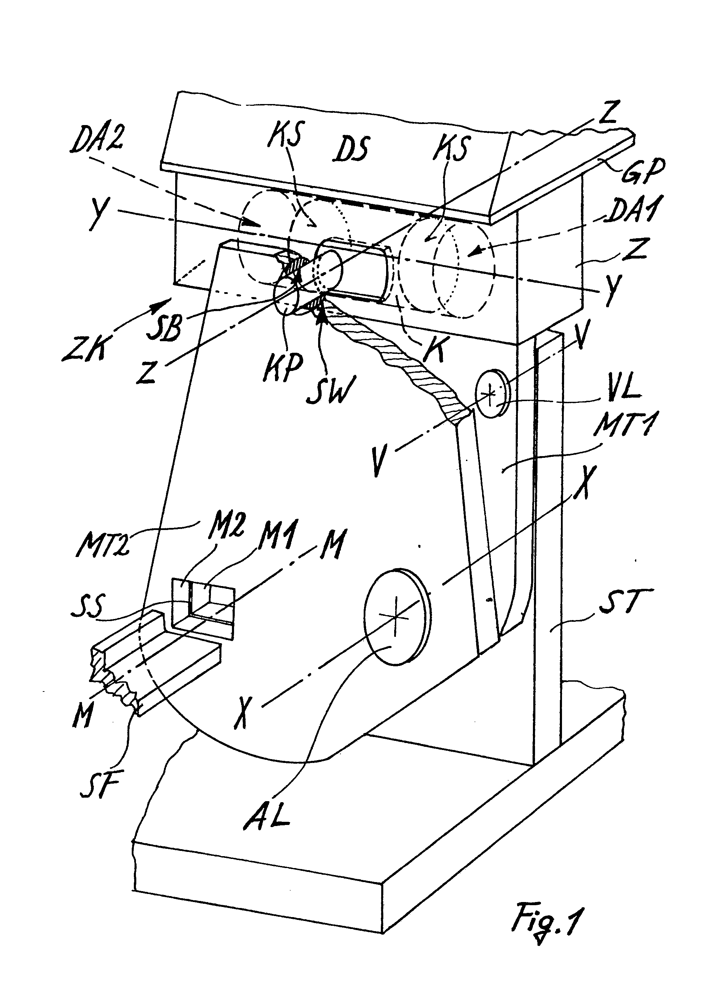

Bei der in Fig. 1 dargestellten Schere sind zwei Messerträger MT1 und MT2 aneinander durch ein Arbeitslager AL mit der zu einer Schneidgutführung SF parallelen Achse X-X schwenkbar gelagert. Außerdem ist die gesamte Messerträgeranordnung an einem Ständer ST des Maschinengestells um eine ebenfalls zur Schneidgutführung parallele Achse V-V schwenkbar gelagert und kann mit Hilfe eines nicht dargestellten Feststellantriebes zur Anlage des Messer M1 des ersten Messerträgers MT1 am Schneidgut vor Beginn des Schneidvorganges verschwenkt werden. Danach wird der erste Messerträger in bezug auf die Schneidgutführung bzw. das Maschinengestell festgesetzt, und der zweite Messerträger MT2 wird durch eine Zylinder-Kolbenanordnung ZK zur Durchführung des Schnittes gegen den ersten Messerträger verschwenkt, wobei sich das Messer M2 an der Schnittstelle nach oben bewegt.

Die Zylinder-Kolbenanordnung ist für die Arbeits- und Rückstellbewegung doppeltwirkend ausgebildet und mit entsprechend gegenläufig wirkenden Druck-Arbeitsräumen DA1, DA2 versehen. Diese im Zylinder Z befindlichen, mit Hochdruckfluid beaufschlagten Kammern sowie eine zugehörige Druckspeiseeinrichtung DS sind mit dem ersten Messerträger MT1 räumlich fest verbunden. Die Druckspeiseeinrichtung ist als geschlossene Baueinheit auf einer Grundplatte GP aufgebaut, die ihrerseits mit dem Zylinder Z und mit dem Messerträger MT1 starr verbunden ist. Speiseeinrichtung, Antriebsorgan und Messerträger bilden somit eine Baueinheit und nehmen gemeinsam an der Zustell-Schwenkbewegung zur Anlage des Messers M1 am Schneidgut teil.

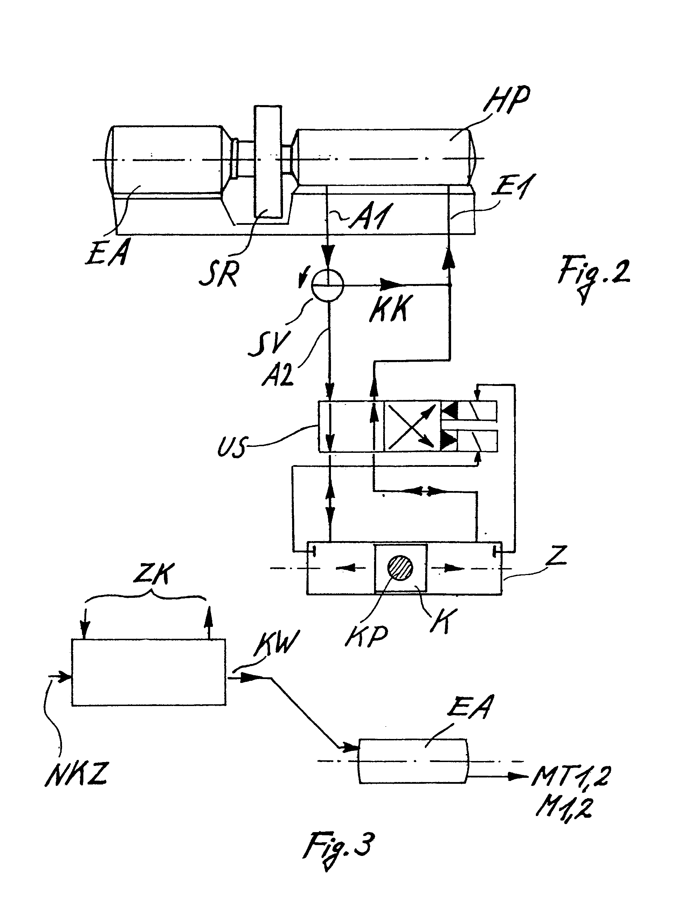

Die Druckspeiseeinrichtung DS ist, wie im einzelnen aus Fig. 2 hervorgeht, mit einer Hochdruckpumpe HP und einem elektromotorischen Antriebsaggregat EA sowie einem geschlossenen Fluid-Antriebskreislauf versehen. Somit entfallen wegen der vorgenannten Teilnahme des Antriebsorgans und der Druckspeiseeinrichtung an der Bewegung des ersten Messerträgers jegliche beweglichen Anschluß- oder Verbindungselemente für das Hochdruckfluid.

Die Achse Y-Y der Zylinder-Kolbenanordnung ZK ist in der aus Fig. 1 ersichtlichen Weise im oberen Endbereich des Messerträgers MT1 sowie bezüglich der Achse X-X des Arbeitslagers AL mit Abstand und über Kreuz angeordnet, also im wesentlichen horizontal liegend. Die horizontale Ausdehnung der Zylinder-Kolbenanordnung stimmt annähernd mit der entsprechenden Ausladung der Messerträgeranordnung überein, so daß sich eine seitlich bzw. horizontal gedrängte, platzsparende Konstruktion ergibt.

Weiterhin ist auch die Anordnung der Druckspeiseeinrichtung DS oberhalb der Messerträgeranordnung und der Zylinder-Kolbenanordnung von besonderem Vorteil, weil hierdurch kein Platz im Bereich der Schnittstelle und des Schneidguttransportes oder seitlich der Schere beansprucht wird. Die Druckspeiseeinrichtung ist ferner in ihrer Horizontalausdehnung auf den Bereich der Messerträgeranordnung und des Antriebsorgans beschränkt, was zur Platzersparnis wesentlich beiträgt.

Zur seitlichen Platzersparnis trägt ferner wesentlich die aus Fig. 1 ersichtliche Verbindung des Antriebsorgans mit dem zweiten Messerträger MT2 durch eine im Bereich des Zylinders Z angeordneten Kupplung KP bei. Diese Kupplung ist als bezüglich der Achse Y-Y radial an den doppeltwirkenden Kolben K angesetzter und durch eine entsprechende Aussparung des Zylinders Z nach außen geführter Bolzenkörper ausgebildet, der zwischen den beiderseitigen Kolbenstirnseiten KS angeordnet ist. Damit wird jegliche zusätzliche Seitenausladung infolge auskragender Kolbenstangen- oder Gelenkteile vermieden. Für den Ausgleich der kreisförmigen Relativbewegungen zwischen Zylinder Z und Messerträger MT2 sind entsprechende Ausgleichsgelenke in besonders einfacher Form vorgesehen. So ist der die Kupplung tragende Kolben K im Zylinder Z, d. h. um die Achse Y-Y schwenkbar gelagert, was den erforderlichen Radialausgleich ohne zusätzliches Gelenk ermöglicht. Im Bereich der Verbindung zwischen Kupplung und Messerträger MT2 ist dann nur noch eine Schwenkführung SW in Form eines einfachen Gelenkes sowie für den Axialausgleich eine nur geringfügig bewegte Schiebeführung SB erforderlich. Endlich trägt zur Platzersparnis wesentlich bei, daß in der aus Fig. 1 ersichtlichen Weise die Mittel für die Betätigung des zweiten Messerträgers MT2 im Bereich oberhalb des Arbeitslagers AL angeordnet sind, wobei die Kupplungsachse Z-Z im wesentlichen parallel zur Mittelachse M-M des Schneidgutes im Bereich der Schnittstelle SS und zur Achse X-X des Arbeitslagers AL angeordnet ist. Auf diese Weise ergeben sich geringe Bewegungshübe der gegeneinander bewegten Kraftübertragungsteile und geringe Verdrehungsmomente im Maschinenaufbau.

Wie im einzelnen aus Fig. 2 ersichtlich ist, ist das Motor-Pumpenaggregat EA, HP der Druckspeiseeinrichtung DS mit einem Schwungrad SR oder einer sonst vergleichsweise großen Schwungmasse versehen, so daß sich eine hohe Rotationsenergiespeicherung ergibt. Diese wird auf einen im Ruhezustand leerlaufend geschlossenen Fluidkreislauf übertragen, der zwischen Einlaß E1 und Auslaß A1 der Pumpe HP über einen Kurzschlußkanal KK mit einem Steuerventil SV verläuft. Zum Einleiten eines Schneidvorganges wird das Steuerventil jeweils aus seiner Ruhestellung mit durchgeschaltetem Kurzschlußkanal in seine Arbeitsstellung mit gesperrtem Kurzschlußkanal und durchgeschaltetem Auslaß A2 zum Antriebsorgan ZK umgeschaltet. Dadurch kann im Bereich der Speiseeinrichtung auf größere Ölmengen verzichtet werden, wie sie sonst für hydraulisch-pneumatische Druckspeicher erforderlich sind. Dies trägt besonders zur Betriebssicherheit und zur Verminderung von Brandgefahren bei Warmscheren bei.

Der automatische Arbeitsablauf der Schere wird ferner durch eine von der Hubstellung des Kolbens abhängige Umsteuervorrichtung für den Übergang vom Vorlauf bzw. Schneidvorgang zum Rücklauf in die Ruhestellung vereinfacht.

Wie in Fig. 3 dargestellt, ist der Fluidkreislauf der Druckspeiseeinrichtung DS mit einem Kühlungs-Wärmetauscher KW versehen, der an eine Niederdruck-Kühlflüssigkeitszuführung NKZ angeschlossen ist. Hierdurch sind also keine Hochdruck-Verbindungselemente bedingt. Andererseits ermöglicht eine solche Kühlung einen besonders kompakten Aufbau der Speiseeinheit durch sichere Beherrschung der Wärmeabfuhr von den energieumsetzenden Komponenten, insbesondere die Verwendung eines flüssigkeitsgekühlten Elektromotors für den Pumpenantrieb. Hierdurch werden nicht nur die Abmessungen des Motors vermindert, sondern vor allem auch die Leistungsdichte bei der Rotationsenergiespeicherung verbessert. Zweckmäßig wird dazu das Kühlsystem des Elektromotors in Serie sowie in Durchflußrichtung nachgeordnet in den Kühlflüssigkeitsdurchfluß eingeschaltet. Ferner ergibt sich eine vorteilhafte Vereinfachung dadurch, daß ein bei Warmscheren für die Messerträgeranordnung, insbesondere für den Messerbereich vorgesehene Flüssigkeitskühlung in Durchflußrichtung nachgeordnet oder in anderer Schaltung mit dem Kühlsystem der Speiseeinrichtung verbunden wird.

## Patentansprüche

1. Schere für stabförmiges Schneidgut, mit zwei Messerträgern (MT1, MT2) sowie mit einer Schneid-Antriebsvorrichtung, die ein mit beiden Messerträgern in Wirkverbindung stehendes, fluidisches Antriebsorgan mit mindestens einem Druck-Arbeitsraum (DA1, DA2) sowie eine Fluid-Druckspeiseeinrichtung (DS) aufweist, und mit einer zuführseitigen Schneidgutführung (SF), wobei ein erster der Messerträger (MT1) quer zur Längsachse des Schneidgutes einstellbar ist, dadurch gekennzeichnet, daß die beiden Messerträger (MT1, MT2) aneinander durch ein Arbeitslager (AL) mit zur Schneidgutführung (SF) wenigstens annähernd paralleler, im Abstand angeordneter Achse (X-X) schwenkbar gelagert sind, daß die Messerträger (MT1, MT2) um eine ebenfalls zur Schneidgutführung (SF) parallele Achse (V-V) gemeinsam schwenkbar sind und daß die Druck-Arbeitskammern (DA1, DA2) des fluidischen Antriebsorgans sowie die druckfluidführenden Elemente der Druckspeiseeinrichtung (DS) mit dem ersten Messerträger (MT1) fest verbunden sind.

2. Schere nach Anspruch 1, dadurch gekennzeichnet, daß das mit den beiden Messerträgern (MT1, MT2) in Wirkverbindung stehende, fluidische Antriebsorgan als Zylinder-Kolbenanordnung (ZK) ausgebildet ist.

3. Schere nach Anspruch 2, dadurch gekennzeichnet, daß die Achse (Y-Y) der Zylinder-Kolbenanordnung (ZK) im oberen Bereich des ersten Messerträgers (MT1) über Kreuz und mit Abstand bezüglich der Achse (X-X) des Arbeitslagers (AL) angeordnet ist.

4. Schere nach Anspruch 3, dadurch gekennzeichnet, daß der Kolben (K) der Zylinder-Kolbenanordnung (ZK) durch eine radial zur Zylinder- bzw. Kolbenachse (Y-Y) hinausgeführte Kupplung (KP) mit dem zweiten Messerträger (MT2) in Wirkverbindung steht.

5. Schere nach Anspruch 2, 3 oder 4, dadurch gekennzeichnet, daß die Zylinder-Kolbenanordnung (ZK) doppeltwirkend mit beiderseits des Kolbens (K) angeordneten Druck-Arbeitsräumen (DA1, DA2) ausgebildet ist und daß die Kupplung (KP) für die Verbindung mit dem zweiten Messerträger (MT2) im Bereich zwischen den beiden Kolben-Stirnseiten (KS) angeordnet ist.

6. Schere nach Anspruch 4 oder 5, dadurch gekennzeichnet, daß der Kolben (K) des fluidischen Antriebsorgans innerhalb des Zylinders (Z) um die Zylinder- bzw. Kolbenachse (Y-Y) schwenkbar gelagert ist und daß die Kupplung (KP) für die Verbindung des Kolbens (K) mit dem zweiten Messerträger (MT2) mit wenigstens einer Schwenk- und Schiebeführung (SW, SB) für den Radial- bzw. Axialausgleich zwischen den Anschlußstellen der Kupplung am Kolben einerseits und am zweiten Messerträger andererseits versehen ist.

7. Schere nach einem oder mehreren der vorhergehenden Ansprüche, dadurch gekennzeichnet, daß die Zylinder-Kolbenanordnung (ZK) mit wenigstens annähernd horizontal angeordneter Zylinder- bzw. Kolbenachse (Y-Y) am ersten Messerträger (MT1) angebracht ist und daß die horizontale Ausdehnung des Zylinders (Z) wenigstens annähernd mit derjenigen der Messerträgeranordnung (MT1, MT2) übereinstimmt.

8. Schere nach einem oder mehreren der vorhergehenden Ansprüche, dadurch gekennzeichnet, daß die Druckspeiseeinrichtung (DS) in ihrer Horizontalausdehnung wenigstens annähernd innerhalb der Horizontalausdehnung der Messerträgeranordnung (MT1, MT2) und/oder der Zylinder-Kolbenanordnung (ZK) liegend ausgebildet ist.

9. Schere nach einem oder mehreren der vorhergehenden Ansprüche, dadurch gekennzeichnet, daß die Druckspeiseeinrichtung (DS) eine Hochdruckpumpe mit einem elektromotorischen Antriebsaggregat (EA) aufweist.

10. Schere nach einem oder mehreren der vorhergehenden Ansprüche, dadurch gekennzeichnet, daß die Druckspeiseeinrichtung (DS) einen geschlossenen Antriebs-Fluidkreislauf enthält.

11. Schere nach Anspruch 10, dadurch gekennzeichnet, daß der Fluidkreislauf der Druckspeiseeinrichtung (DS) mit einem Kühlungs-Wärmetauscher (KW) versehen ist, der an eine Niederdruck-Kühlflüssigkeitszuführung (NKZ) angeschlossen ist.

12. Schere nach Anspruch 11, dadurch gekennzeichnet, daß das Antriebsaggregat (EA) einen flüssigkeitsgekühlten Elektromotor aufweist, dessen Kühlsystem in das Kühlflüssigkeitssystem des Kühlungs-Wärmetauschers (KW) eingeschaltet ist.

13. Schere nach Anspruch 12, dadurch gekennzeichnet, daß das Kühlsystem des Elektromotors in Serie sowie in Durchflußrichtung der Kühlflüssigkeit bezüglich des Kühlungs-Wärmetauschers (KW) nachgeordnet in den Kühlflüssigkeitsdurchfluß eingeschaltet ist.

14. Schere nach einem oder mehreren der vorhergehenden Ansprüche, dadurch gekennzeichnet, daß für die Messerträgeranordnung, insbesondere für deren Messerbereich, ein Flüssigkeits-Kühlsystem vorgesehen ist und daß dieses Kühlsystem vorzugsweise in Durchflußrichtung nachgeordnet an das Kühlsystem der Druckspeiseeinrichtung (DS) angeschlossen ist.

**Claims**

1. Shears for bar stock, the shears comprising two blade carriers (MT1, MT2) and a cutting drive mechanism comprising a fluid drive element and a fluid pressure supply facility (DS), the drive element being operatively connected to the two blade carriers and having at least one pressure working chamber (DA1, DA2), the shears having a feed-side guide (SF) for the bar stock, the first blade carrier (MT1) being adjustable transversely of the longitudinal axis of the bar stock, characterised in that the two blade carriers (MT1, MT2) are mounted for pivoting on one another by means of a work bearing (AL) whose axis (X-X) extends at least substantially parallel to and at a distance from the stock guide (SF); the blade carriers (MT1, MT2) are pivotable together around an axis (V-V) which is also parallel to the stock guide (SF); and the pressure working chambers (DA1, DA2) of the fluid drive element and the pressure-fluid-conveying elements of the pressure supply facility (DS) are fixedly connected to the first blade carrier (MT1).

2. Shears according to claim 1, characterised in that the fluid drive element is a cylinder and piston arrangement (ZK).

3. Shears according to claim 2, characterised in that the axis (Y-Y) of the cylinder and piston arrangement (ZK) is so disposed in the top zone of the first blade carrier (MT1) as to cross and be at a distance from the axis (X-X) of the work bearing (AL).

4. Shears according to claim 3, characterised in that the piston (K) of the cylinder and piston arrangement (ZK) is operatively connected to the second blade carrier (MT2) by a coupling (KP) which projects radially of the cylinder and piston axis (Y-Y).

5. Shears according to claim 2 or 3 or 4, characterised in that the cylinder and piston arrangement (ZK) is double-acting with pressure working chambers (DA1, DA2) disposed on both sides of the piston (K), and the coupling (KP) is disposed in the region between the two piston end faces (KS).

6. Shears according to claim 4 or 5, characterised in that the piston (K) of the fluid drive element is mounted for pivoting in the cylinder (Z) around the cylinder and piston axis (Y-Y), and the coupling (KP) has at least one pivoting and sliding guide (SW, SB) for radial and axial compensation between, on the one hand, the places of connection of the coupling to the piston and, on the other hand, to the second blade carrier.

7. Shears according to one or more of the previous claims, characterised in that the cylinder and piston arrangement (ZK) is so disposed on the first blade carrier (MT1) that the cylinder and piston axis (Y-Y) is at least substantially horizontal, and the horizontal extent of the cylinder (Z) is at least substantially similar to that of the blade carrier arrangement (MT1, MT2).

8. Shears according to one or more of the previous claims, characterised in that the pressure supply facility (DS) is so devised as regards its horizontal extent as to be disposed at least substantially within the horizontal extent of the blade carrier arrangement (MT1, MT2) and/or the cylinder and piston arrangement (ZK).

9. Shears according to one or more of the previous claims, characterised in that the pressure supply facility (DS) is high-pressure pump associated with an electric motor drive unit (EA).

10. Shears according to one or more of the previous claims, characterised in that the pressure supply facility (DS) comprises a closed drive fluid circuit.

11. Shears according to claim 10, characterised in that the fluid circuit of the pressure supply facility (DS) has a cooling heat exchanger (KW) which is connected to a low-pressure cooling liquid supply (NKZ).

12. Shears according to claim 11, characterised in that the drive unit (EA) has a liquid-cooled electric motor whose cooling system is connected into the cooling liquid system of the cooling heat exchanger (KW).

13. Shears according to claim 12, characterised in that the cooling system of the electric motor is connected into the cooling liquid flow in series with and, as considered in the direction of flow of such liquid, after the cooling heat exchanger (KW).

14. Shears according to one or more of the previous claims, characterised in that a liquid cooling system is provided for the blade carrier arrangement, more particularly for the blade zone thereof and is connected to and, as considered in the flow direction of the cooling liquid, preferably after the cooling system of the pressure supply facility (DS).

## Revendications

1. Cisaille à découper des produits en barre, se composant de deux porte-couteaux (MT1, MT2), ainsi que d'un dispositif d'entraînement pour la coupe, qui présente un organe fluidique d'entraînement coopérant avec les deux porte-couteaux et ayant au moins une chambre de travail sous pression (DA1, DA2), ainsi qu'un dispositif d'alimentation en fluide sous pression (DS), et d'un guidage (SF) du produit à découper du côté de l'entrée, un premier porte-couteau (MT1) pouvant être réglé transversalement à l'axe longitudinal du produit à découper, caractérisé en ce que les deux porte-couteaux (MT1, MT2) sont montés basculants l'un contre l'autre, par un palier de travail (AL) dont l'axe (X-X) est disposé à distance du guidage (SF) du produit à découper et au moins approximativement parallèlement à ce guidage, en ce que les porte-couteaux (MT1, MT2) peuvent basculer en commun autour d'un axe (V-V) également parallèle au guidage (SF) du produit à découper et en ce que les chambres de travail sous pression (DA1, DA2) de l'organe fluidique d'entraînement, ainsi que les éléments du dispositif d'alimentation sous pression (DS), qui conduisent le fluide sous pression, sont reliés rigidement au premier porte-couteau (MT1).

2. Cisaille suivant la revendication 1, caractérisé en ce que l'organe fluidique d'entraînement coopérant avec les deux porte-couteaux (MT1, MT2) est constitué par un dispositif à cylindre et piston (ZK).

3. Cisaille suivant la revendication 2, caractérisé en ce que l'axe (Y-Y) du dispositif à cylindre et piston (ZK) est disposé dans la région supérieure du premier porte-couteau (MP1) en le croisant, et à distance de l'axe (X-X) du palier de fonctionnement (AL).

4. Cisaille suivant la revendication 3, caractérisé en ce que le piston (K) du dispositif à cylindre et piston (ZK) coopère avec le second porte-couteaux (MT2) par un accouplement (KP) sortant radialement par rapport à l'axe du cylindre et du piston (Y-Y).

5. Cisaille suivant la revendication 2, 3 ou 4, caractérisé en ce que le dispositif à cylindre et piston (ZK) est à double effet, avec des chambres de travail sous pression (DA1, DA2) des deux côtés du piston (K), et en ce que l'accouplement (KP) pour la liaison avec le second porte-couteaux (MT2) est disposé dans la région comprise entre les deux faces frontales du piston (KS).

6. Cisaille suivant la revendication 4 ou 5, caractérisé en ce que le piston (K) de l'organe fluidique d'entraînement est monté pivotant à l'intérieur du cylindre (Z) autour de l'axe du cylindre et du piston (Y-Y), et en ce que l'accouplement (KP) pour la liaison du piston (K) avec le second porte-couteaux (MT2) est muni d'au moins un guidage de basculement et de coulissement (SW, SB) pour la compensation radiale et axiale entre les points de raccordement de l'accouplement sur le piston, d'une part, et sur le second porte-couteaux, d'autre part.

7. Cisaille suivant l'une ou plusieurs des revendications précédentes, caractérisé en ce que le dispositif à cylindre et piston (ZK) ayant un axe du cylindre et du piston (Y-Y) disposé au moins approximativement horizontalement est fixé au premier porte-couteaux (MT1) et l'étendue horizontale du cylindre (Z) correspond au moins approximativement à celle du dispositif de porte-couteaux (MT1, MT2).

8. Cisaille suivant l'une ou plusieurs des revendications précédentes, caractérisé en ce que l'étendue horizontale du dispostif d'alimentation sous pression (DS) est comprise au moins approximativement dans l'étendue horizontale du dispositif de porte-couteaux (MT1, MT2) et/ou du dispositif à cylindre et piston (ZK).

9. Cisaille suivant l'une ou plusieurs des revendications précédentes, caractérisé en ce que le dispositif d'alimentation sous pression (DS) présente une pompe haute pression avec un équipement d'entraînement (EA) par moteur électrique.

10. Cisaille suivant l'une ou plusieurs des revendications précédentes, caractérisé en ce que le dispositif d'alimentation sous pression (DS) contient un circuit fermé de fluide d'entraînement.

11. Cisaille suivant la revendication 10, caractérisé en ce que le circuit de fluide du dispostif d'alimentation sous pression (DS) est muni d'un échangeur de chaleur pour le refroidissement (KW) qui est raccordé à une arrivée de liquide réfrigérant sous basse pression (NKZ).

12. Cisaille suivant la revendication 11, caractérisé en ce que l'équipement d'entraînement (EA) présente un moteur électrique refroidi par du liquide, dont le système de refroidissement est branché dans le système du liquide, l'échangeur de chaleur pour le refroidissement (KW).

13. Cisaille suivant la revendication 12, caractérisé en ce que le système de refroidissement du moteur électrique est monté en série dans le circuit du liquide réfrigérant et en aval de l'échangeur de chaleur pour le refroidissement (KV) dans le sens de passage du liquide réfrigérant.

14. Cisaille suivant l'une ou plusieurs des revendications précédentes, caractérisé en ce que, pour le dispositif de porte-couteaux, notamment pour ce qui concerne la région de coupe, il est prévu un système de refroidissement par liquide, et en ce que ce système de refroidissement est raccordé, de préférence, en aval par rapport au sens de passage au système de refroidissement du dispositif d'alimentation sous pression (DS).

Fig.1

Fig.2

Fig.3